# EUROPÄISCHE PATENTANMELDUNG

(11) **EP 2 708 270 A2**
(43) Veröffentlichungstag der Anmeldung: **19.03.2014**
(21) Anmeldenummer: 13184629.7
(22) Anmeldetag: 16.09.2013
(51) Int. Cl.: B01D 41/02

(54) **Verfahren zur Regenerierung eines mit Lack behafteten Filterhilfsmaterials**

(30) Priorität: 18.09.2012 DE 102012216634
(71) Anmelder: R. Scheuchl GmbH, 94496 Ortenburg (DE)
(72) Erfinder: Stahl, Rudolf, 94469 Deggendorf (DE); Dr. Dinglreiter, Udo, 94496 Ortenburg (DE)
(74) Vertreter: Gassner, Wolfgang

(57) **Zusammenfassung**

Die Erfindung betrifft ein Verfahren zur Regenerierung eines mit Lack behafteten Filterhilfsmaterials (3), welches aus Partikeln mit einer mittleren Korngröße im Bereich von 10 µm bis 100 µm gebildet ist, wobei das Filterhilfsmaterials (3) in eine thermische Behandlungseinrichtung (15) überführt wird, in der das Filterhilfsmaterial (3) in einem Fluidbett bewegt und auf eine Temperatur im Bereich von 400°C bis 1500°C aufgeheizt wird, so dass der an den Partikeln anhaftende restliche Lack thermisch zersetzt und von den Partikeln gelöst wird.

## Beschreibung

Die Erfindung betrifft ein Verfahren zur Regenerierung eines mit Lack behafteten Filterhilfsmaterials.

Die DE 10 2008 029 052 A1 offenbart eine Filtervorrichtung zum Abtrennen eines Nasslack-Oversprays aus einem Rohgasstrom. Dabei wird der Rohgasstrom durch ein Filterhilfsmaterial geführt. Das Filterhilfsmaterial ist aus Partikeln mit einer mittleren Korngröße im Bereich von 10 µm bis 100 µm gebildet. Es besteht beispielsweise aus Steinmehl, Aluminiumsilikaten, Aluminiumoxiden, Oxiden des Siliziums oder dgl.

Beim Durchführen des Rohgasstroms durch das Filterhilfsmaterial werden die darin enthaltenen Overspray-Tröpfchen an die Partikel des Filterhilfsmaterials gebunden, wodurch der Rohgasstrom gereinigt wird. Das mit Lack behaftete Filterhilfsmaterial wird nach dem Stand der Technik entsorgt. Die Entsorgung des Filterhilfsmaterials verursacht einen hohen Kostenaufwand.

Aufgabe der Erfindung ist es, die Nachteile nach dem Stand der Technik zu beseitigen. Es soll insbesondere ein Verfahren zur Regenerierung eines mit Lack behafteten Filterhilfsmaterials angegeben werden.

Diese Aufgabe wird durch die Merkmale des Anspruchs 1 gelöst. Zweckmäßige Ausgestaltungen der Erfindung ergeben sich aus den Merkmalen der Ansprüche 2 bis 10.

Nach Maßgabe der Erfindung wird zur Regenerierung eines mit Lack behafteten Filterhilfsmaterials, welches aus Partikeln mit einer mittleren Korngröße im Bereich von 10 µm bis 100 µm gebildet ist, ein Verfahren vorgeschlagen, bei dem das Filterhilfsmaterial in eine thermische Behandlungseinrichtung überführt wird, in der das Filterhilfsmaterial in einem Fluidbett bewegt und durch Verbrennung eines Gases auf eine Temperatur im Bereich von 400°C bis 1500°C aufgeheizt wird, so dass an den Partikeln anhaftender Lack thermisch zersetzt und von den Partikeln gelöst wird.

Das vorgeschlagene Verfahren ermöglicht die Regenerierung von mit Lack belasteten Filterhilfsmaterialien. Infolgedessen können Filterhilfsmaterialien mehrfach verwendet und damit Entsorgungskosten eingespart werden. Indem erfindungsgemäß das Filterhilfsmaterial in der thermischen Behandlungseinrichtung durch Verbrennung eines Gases aufgeheizt wird, kann die Bildung eines explosiven Staubgemischs verhindert werden, wie sie beispielsweise bei einem Aufheizen des mit Lack behafteten Filterhilfsmaterials außerhalb einer thermischen Behandlungseinrichtung auftreten kann. Abgesehen davon kann durch die erst im Fluidbettofen erfolgende thermische Behandlung die durch Autooxidation von Methan frei werdende Energie genutzt und damit der zum Aufheizen erforderliche Energieaufwand reduziert werden.

Nach einer vorteilhaften Ausgestaltung der Erfindung wird das Filterhilfsmaterial vor dem Überführen in die thermische Behandlungseinrichtung mechanisch behandelt. Dazu können die folgenden Schritte ausgeführt werden:
a) Mechanisches Behandeln des Filterhilfsmaterials in einer mechanisch-pneumatischen Behandlungseinrichtung, in der das Filterhilfsmaterial in einem weiteren Fluidbett bewegt wird, so dass die Partikel aneinander reiben und der daran anhaftende Lack zumindest teilweise von den Partikeln gelöst sowie eine Oberfläche der Partikel geglättet wird, und
b) Abtrennen einer sich bei der mechanischen Behandlung des Filterhilfsmaterials ausbildenden Staubfraktion.

Im Sinne der vorliegenden Erfindung wird unter dem Begriff "Fluidbett" ein Wirbelbett verstanden, welches durch einen Gasstrom erzeugt wird. Zur Erzeugung des Gasstroms können beispielsweise in einer Bodenplatte der mechanisch-pneumatischen Behandlungseinrichtung mehrere Gasdüsen vorgesehen sein, durch welche das Gas auf das Filterhilfsmaterial geblasen wird. Die im Fluidbett bewegten Partikel stoßen und/oder reiben aneinander. Infolgedessen löst sich der Lack zumindest teilweise von den Partikeln. Ferner wird eine Oberfläche der Partikel geglättet, d. h. die Oberflächenenergie der Partikel wird verringert. Die beim Glätten der Oberfläche der Partikel anfallende Staubfraktion wird entfernt. Nach dem mechanischen Behandeln des Filterhilfsmaterials sind die Partikel nur noch teilweise mit Lack behaftet. Sie weisen eine geringere Oberflächenenergie und damit auch eine verringerte Sinteraktivität auf.

Das vorteilhafterweise mechanisch behandelte Filterhilfsmaterial wird anschließend, vorzugsweise ohne Zwischenschritte bzw. Zwischenbehandlung, in eine thermische Behandlungseinrichtung überführt. Es wird dort in einem weiteren Fluidbett bewegt und auf eine Temperatur im Bereich von 400°C bis 1500°C, vorzugsweise 650°C bis 1100°C, aufgeheizt. Dabei wird der an den Partikeln anhaftende restliche Lack thermisch zersetzt. Die Zersetzungsprodukte, insbesondere Kohlenmonoxid und Kohlendioxid, werden aus der thermischen Behandlungseinrichtung abgeführt. - Wegen der bei der mechanischen Behandlung bewirkten Verringerung der Sinteraktivität, wird eine unerwünschte Bildung von Agglomeraten durch Sinterprozesse während der thermischen Behandlung des Filterhilfsmaterials vermieden.

Nach einer vorteilhaften Ausgestaltung der Erfindung weist das Filterhilfsmaterial eine mittlere Korngröße im Bereich von 20 µm bis 80 µm, vorzugsweise im Bereich von 30 µm bis 70 µm, auf. Das Filterhilfsmaterial ist zweckmäßigerweise aus Steinmehl, insbesondere Kalkmehl, Aluminiumsilikaten, Aluminiumoxid, oder Siliziumoxiden, insbesondere Siliziumdioxid, gebildet. Derartiges Filterhilfsmaterial ist thermisch stabil und kann mit dem vorgeschlagenen Verfahren regeneriert werden.

Der Lack ist beispielsweise aus einem Acrylharz, insbesondere einem aus zwei Komponenten gebildeten Acrylharz, gebildet. Derartige Acrylharze bzw. Acryllacke werden vor allem in der Automobilindustrie zum Lackieren von Karosserien verwendet. Das vorgeschlagene Verfahren eignet sich also insbesondere zur Regenerierung von mit Lack behafteten Filterhilfsmaterialien, welche beim Lackieren im Bereich der Automobilindustrie anfallen.

Nach einer weiteren besonders vorteilhaften Ausgestaltung der Erfindung wird das Filterhilfsmaterial vor und/oder während der mechanischen Behandlung auf eine Temperatur im Bereich von 50°C bis 150°C, vorzugsweise 60°C bis 120°C, erwärmt. Der vorgeschlagene Schritt der Erwärmung trägt zu einer schnellen und vollständigen Aushärtung des an der Oberfläche der Partikel anhaftenden Lacks bei. Infolgedessen nimmt die Plastizität des Lacks ab. Es wird spröde und lässt sich dann einfacher mechanisch von den Partikeln lösen.

Nach einer weiteren vorteilhaften Ausgestaltung wird das Filterhilfsmaterial in der mechanisch-pneumatischen Behandlungseinrichtung mit einem Blasluftstrom durch ein Blasrohr gegen eine Prallglocke beschleunigt. Durch das Auftreffen der mit Lack behafteten Partikel mit hoher Geschwindigkeit auf eine Prallglocke kann besonders effektiv der an den Partikeln anhaftende Lack gelöst werden. Dabei treffen die Partikel entweder unmittelbar auf die Prallglocke oder auf andere mit Lack behaftete Partikel auf. Durch die mechanische Behandlung in der mechanisch-pneumatischen Behandlungseinrichtung wird nicht nur Lack von der Oberfläche der Partikel gelöst. Unebenheiten an der Oberfläche, insbesondere vorstehende Spitzen, brechen ab. Kanten der Partikel werden gerundet. Insgesamt wird die Oberfläche der Partikel bei der mechanischen Behandlung geglättet. Die Oberfläche der Partikel verkleinert sich, wodurch sich die Sinteraktivität der Partikel und damit die Neigung zur Ausbildung von Agglomeraten bei der nachfolgenden thermischen Behandlung verringert.

Nach einer weiteren Ausgestaltung des Verfahrens wird die Staubfraktion aus der mechanischen Behandlungseinrichtung abgesaugt. Die Staubfraktion besteht insbesondere aus gelösten Lackresten sowie aus Partikeln des Filterhilfsmaterials mit einer Korngröße von weniger als 10 µm, vorzugsweise weniger als 5 µm.

Nach der mechanischen Behandlung wird das Filterhilfsmaterial in eine thermische Behandlungseinrichtung überführt. Die thermische Behandlung des Filterhilfsmaterials schließt sich vorzugsweise unmittelbar an die mechanische Behandlung des Filterhilfsmaterials an, d. h. zwischen der mechanischen und der thermischen Behandlung finden keine weiteren Behandlungsschritte statt. Die thermische Behandlungseinrichtung umfasst zweckmäßigerweise einen Fluidbettofen, d. h. in der thermischen Behandlungseinrichtung wird das mechanisch behandelte Hilfsmaterial während der thermischen Behandlung in einem Fluidbett bewegt.

Das regenerierte Filterhilfsmaterial kann mit neuem Filterhilfsmaterial, d. h. nicht regeneriertem Filterhilfsmaterial, vermischt werden. Dabei beträgt ein Anteil des neuen Filterhilfsmaterials zweckmäßigerweise 5 bis 20 Gew.%, vorzugsweise 8 bis 13 Gew.%. Das Vermischen mit dem neuen Filterhilfsmaterial kann auch bereits während des mechanischen Behandelns des mit Lack behafteten Filterhilfsmaterials erfolgen.

Nachfolgend werden Ausführungsbeispiele der Erfindung anhand der Zeichnungen näher erläutert. Es zeigen:
- Fig. 1: eine schematische Schnittansicht einer mechanisch-pneumatischen Behandlungseinrichtung und
- Fig. 2: eine schematische Schnittansicht einer thermischen Behandlungseinrichtung.

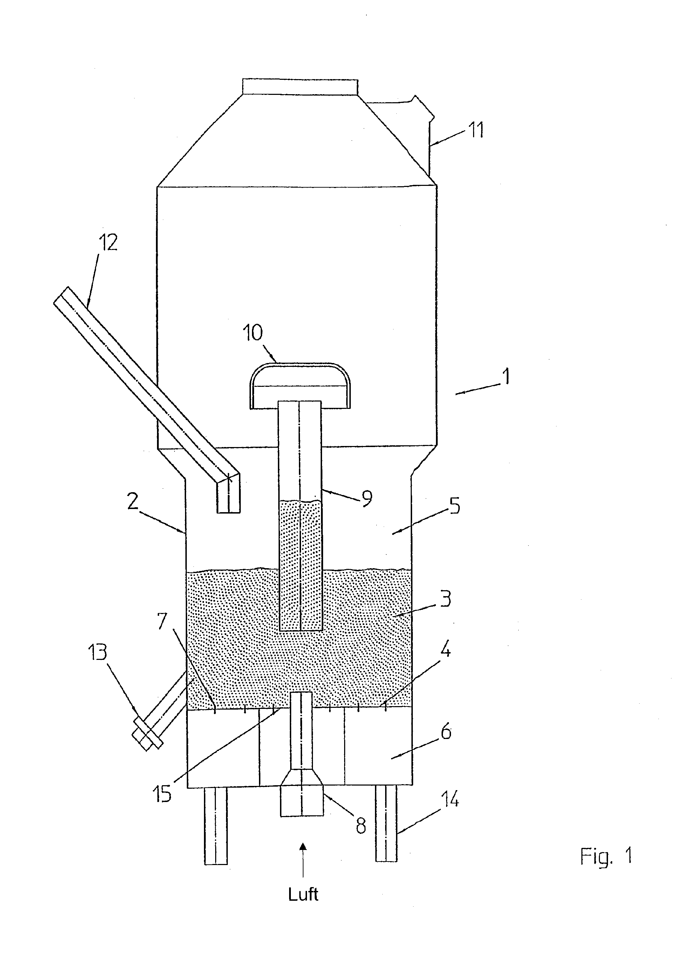

Fig. 1 zeigt eine schematische Schnittansicht einer mechanisch-pneumatischen Behandlungseinrichtung 1. In einem Behälter 2 ist das zu behandelnde Filterhilfsmaterial 3, beispielsweise Steinmehl, aufgenommen. Mit dem Bezugszeichen 4 ist ein Bodenblech bezeichnet, welches eine Behandlungskammer 5 von einer Windkammer 6 trennt. Im Bodenblech 4 sind Luftdüsen 7 vorgesehen. Mit dem Bezugszeichen 8 ist eine Blasluftdüse bezeichnet, welche gegenüberliegend einem Blasrohr 9 in die Behandlungskammer 5 mündet. Am der weiteren Düse 8 gegenüberliegenden Ende des Blasrohrs 9 ist eine Prallglocke 10 vorgesehen. Mit dem Bezugszeichen 11 ist eine Absaugöffnung zum Absaugen einer Staubfraktion bezeichnet. Das Bezugszeichen 12 bezeichnet eine Zuführung zum Zuführen von Filterhilfsmaterial 3. Zum Abführen des behandelten Filterhilfsmaterials 3 dient eine Ablassleitung 13. Luftzuführleitungen 14 münden in die Windkammer 6.

Die Funktion der mechanisch-pneumatischen Behandlungseinrichtung 1 ist wie folgt:
Zu behandelndes Filterhilfsmaterial 3 wird durch die Zuführung 12 der Behandlungskammer 5 zugeführt. Anschließend wird durch die Luftzuführleitungen 14 Luft in die Windkammer 6 und von der Windkammer 6 über die Luftdüsen 7 in die Behandlungskammer 5 gepresst, so dass sich oberhalb des Bodenblechs 4 ein Wirbelbett bzw. ein Fluidbett ausbildet. Durch die Blasluftdüse 8 wird unter hohem Druck Blasluft in das Blasrohr 9 geblasen, wodurch aus dem Wirbelbett Filterhilfsmaterial 3 durch das Blasrohr 9 gegen die Prallglocke 10 beschleunigt wird und von da zurück in das Wirbelbett fällt. Eine sich ausbildende Staubfraktion wird gleichzeitig durch die Absaugöffnung 11 abgesaugt.

Sowohl die durch die Zuführleitungen 14 zugeführte Luft als auch die durch die Blasluftdüse 8 zugeführte Blasluft kann mittels einer - hier nicht gezeigten - Heizvorrichtung auf eine Temperatur im Bereich zwischen 80°C und 120°C aufgeheizt werden. Zweckmäßigerweise wird das Filterhilfsmaterial 3 zunächst mit Heißluft fluidisiert, wodurch an den Partikeln des Filterhilfsmaterials 3 anhaftender Lack aushärtet und spröde wird. Nach einer vorgegebenen ersten Behandlungsdauer mit Heißluft im Wirbelbett von beispielsweise 20 Minuten bis 40 Minuten, wird Blasluft durch die Blasluftdüse 8 zugeführt und das Filterhilfsmaterial 3 gegen die Prallglocke 10 beschleunigt, wodurch die an den Partikeln anhaftenden spröden Lackreste gelöst werden. Eine zweite Behandlungsdauer der Beschleunigung des Filterhilfsmaterials 3 gegen die Prallglocke 10 beträgt vorzugsweise 10 Minuten bis 30 Minuten. Anschließend wird das behandelte Filterhilfsmaterial 3 durch die Ablassleitung 13 aus der Behandlungskammer 5 abgelassen. - Anstelle von Luft und/oder Blasluft kann auch ein Inertgas, z. B. Stickstoff, CO₂ oder dgl., verwendet werden, um einer Explosionsgefahr entgegen zu wirken.

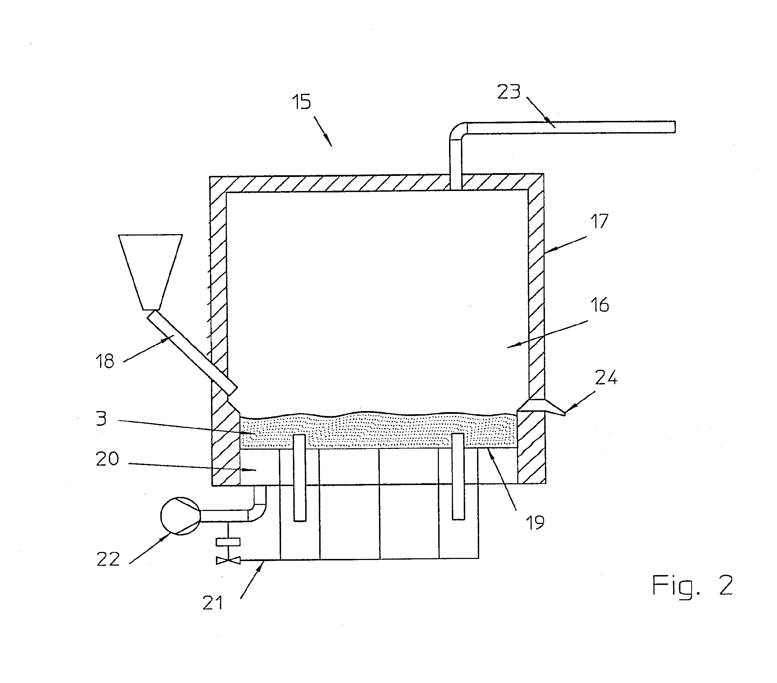

Fig. 2 zeigt eine schematische Ansicht einer allgemein mit dem Bezugszeichen 15 bezeichneten thermischen Behandlungseinrichtung. In eine Ofenkammer 16 eines Fluidbettofens 17 mündet eine weitere Zuführung 18 zum Zuführen des mechanisch behandelten Filterhilfsmaterials 3. Mit dem Bezugszeichen 19 ist ein weiteres Bodenblech bezeichnet, welches die Ofenkammer 16 von einer weiteren Windkammer 20 trennt. Mit dem Bezugszeichen 21 sind Gaszuführleitungen zum Zuführen eines brennbaren Gases, z. B. Methan, Propan, Butan oder dgl., bezeichnet, welche in die Ofenkammer 16 münden. Eine weitere Luftzuführleitung 22 mündet in die weitere Windkammer 20. In dem weiteren Bodenblech 19 vorgesehene weitere Luftdüsen zur Erzeugung eines weiteren Wirbelbetts sind hier nicht gesondert dargestellt. Eine Staubabführleitung ist mit dem Bezugszeichen 23 und eine weitere Ablassleitung zum Ablassen des thermisch behandelten Filterhilfsmaterials 3 mit dem Bezugszeichen 24 bezeichnet.

Die Funktion der thermischen Behandlungseinrichtung 15 ist wie folgt:
Durch die weitere Zuführung 18 wird mechanisch behandeltes Filterhilfsmaterial 3 dem Fluidbettofen 17 zugeführt. Das Filterhilfsmaterial 3 wird oberhalb des weiteren Bodenblechs 19 mittels durch die weitere Windkammer 20 und die im weiteren Bodenblech 19 vorgesehenen weiteren Luftdüsen zugeführter Luft fluidisiert und durch Verbrennung eines über die Gaszuführleitungen 21 zugeführten Gases auf eine Temperatur im Bereich von 500°C bis 900°C aufgeheizt. Eine dabei anfallende Staubfraktion sowie durch die Verbrennung der Lackreste entstehende Abgase werden durch die Staubabführleitung 23 abgeführt.

Das thermisch behandelte Filterhilfsmaterial 3 kann schließlich durch die weitere Ablassleitung 24 aus dem Fluidbettofen 17 abgelassen werden.

### Bezugszeichenliste

- 1: mechanisch-pneumatische Behandlungseinrichtung
- 2: Behälter
- 3: Filterhilfsmaterial
- 4: Bodenblech
- 5: Behandlungskammer
- 6: Windkammer
- 7: Luftdüse
- 8: Blasluftdüse
- 9: Blasrohr
- 10: Prallglocke
- 11: Absaugöffnung
- 12: Zuführung
- 13: Ablassleitung
- 14: Luftzuführleitung
- 15: thermische Behandlungseinrichtung
- 16: Ofenkammer
- 17: Fluidbettofen
- 18: weitere Zuführung
- 19: weiteres Bodenblech
- 20: weitere Windkammer
- 21: Gaszuführleitung
- 22: weitere Luftzuführleitung
- 23: Staubabführleitung
- 24: weitere Ablassleitung

## Patentansprüche

1. Verfahren zur Regenerierung eines mit Lack behafteten Filterhilfsmaterials (3), welches aus Partikeln mit einer mittleren Korngröße im Bereich von 10 µm bis 100 µm gebildet ist, wobei das Filterhilfsmaterials (3) in eine thermische Behandlungseinrichtung (15) überführt wird, in der das Filterhilfsmaterial (3) in einem Fluidbett bewegt und durch Verbrennung eines Gases auf eine Temperatur im Bereich von 400°C bis 1500°C aufgeheizt wird, so dass der an den Partikeln anhaftende Lack thermisch zersetzt und von den Partikeln gelöst wird.

2. Verfahren nach Anspruch 1, wobei vor dem Schritt des Überführens des Filterhilfsmaterials (3) in die thermische Behandlungseinrichtung die folgenden Schritte durchgeführt werden:
a) Mechanisches Behandeln des Filterhilfsmaterials (3) in einer mechanisch-pneumatischen Behandlungseinrichtung (1), in der das Filterhilfsmaterial (3) in einem weiteren Fluidbett bewegt wird, so dass die Partikel aneinander reiben und der daran anhaftende Lack zumindest teilweise von den Partikeln gelöst sowie eine Oberfläche der Partikel geglättet wird, und
b) Abtrennen einer sich bei der mechanischen Behandlung des Filterhilfsmaterials (3) ausbildenden Staubfraktion.

3. Verfahren nach Anspruch 1 oder 2, wobei das Filterhilfsmaterial (3) eine mittlere Korngröße im Bereich von 20 µm bis 80 µm, vorzugsweise im Bereich von 30 µm bis 70 µm, aufweist.

4. Verfahren nach einem der vorhergehenden Ansprüche, wobei das Filterhilfsmaterial (3) aus Steinmehl, Aluminiumsilikaten, Aluminiumoxid oder Siliziumoxiden gebildet ist.

5. Verfahren nach einem der vorhergehenden Ansprüche, wobei der Lack aus einem Acrylharz, insbesondere einem aus zwei Komponenten gebildeten Acrylharz, gebildet ist.

6. Verfahren nach einem der vorhergehenden Ansprüche, wobei das Filterhilfsmaterial (3) vor und/oder während der mechanischen Behandlung auf eine Temperatur im Bereich von 50°C bis 150°C, vorzugsweise 60°C bis 120°C, erwärmt wird.

7. Verfahren nach einem der vorhergehenden Ansprüche, wobei das Filterhilfsmaterial (3) in der mechanisch-pneumatischen Behandlungseinrichtung (1) mit einem Blasluftstrom durch ein Blasrohr (9) gegen eine Prallglocke (10) beschleunigt wird.

8. Verfahren nach einem der vorhergehenden Ansprüche, wobei die Staubfraktion aus der mechanischen Behandlungseinrichtung (1) abgesaugt wird.

9. Verfahren nach einem der vorhergehenden Ansprüche, wobei die thermische Behandlungseinrichtung (15) einen Fluidbettofen (17) umfasst.

10. Verfahren nach einem der vorhergehenden Ansprüche, wobei dem Filterhilfsmaterial (3) 5 Gew.% bis 20 Gew.% weiteres Filterhilfsmaterial zugesetzt wird, welches zuvor noch nicht mit Lack behaftet war.
